# EUROPEAN PATENT APPLICATION

(11) **EP 0 992 196 A1**
(43) Date of publication of application: **12.04.2000**
(21) Application number: 99600010.5
(22) Date of filing: 12.08.1999
(51) Int. Cl.: A23K 1/18

(54) **Enrichment emulsion for zooplankton organisms**

(30) Priority: 09.09.1998 GR 98100335
(71) Applicant: Petsalis, Georgios, 14671 Athens (GR)
(72) Inventor: Petsalis, Georgios, 14671 Athens (GR)
(74) Representative: Tsitsirigou, Argiro Ch.

(57) **Abstract**

The invention refers to a method of preparation of an enrichment emulsion for the nutrition of the rotifera, with the fatty acids that are necessary for their better nutrition in view of the fact that these organisms do not receive, as in nature, the necessary for them fatty acids ω3 from phyto-plankton organisms.

By this invention, the emulsion consists of tiny (µ) bullets containing all necessary fatty acids for the nutrition of the rotifera and thus these can be placed easily in small capsules proper for the zoo-plankton organisms of the fisheries while at the same time the cost of production is decreased. In this way, there is an improvement to the nutrition of the rotifera.

## Description

The invention refers to a means of enrichment that is used for the nutrition of the rotifera, which are zoo-plankton organisms, necessary for the nutrition of the larva.

In nature, the rotifera are fed from phyto-plankton organisms which are rich in ω3 fatty acids. But, in fisheries where there are no phyto-plankton organisms in sufficient quantities or where the various means of enrichment are very expensive, the rotifera with ω3 fats.

The problem has its origin to the fact that these zoo-plankton organisms (rotifera) are so tiny that placing the fatty acids ω3 in capsules of a proportional size is very difficult. Thus, till now, the enrichment was made either by the administration of further zoo-plankton organisms or by the enrichment products with very high cost and consequently the sale prices thereof are high.

By this invention, the means of enrichment consists of tiny (µ) bullets that contain all necessary fatty acids with which should be enriched the nutrition of the rotifera, so as to obtain an improved nutrition of the larva, at a lower cost proportionally to the other products. More precisely, there are two formulas for the production of the enrichment emulsion of the zoo-plankton organisms.
a) For the production of 1000 gr of emulsion
   900 gr sea water
   50 gr cod-liver oil
   35 gr span
   15 gr tween
b) For the production of 1000 gr of emulsion
   500 gr sea water
   250 gr cod-liver oil
   175 gr span
   75 gr tween

By the above two formulas we obtain enrichment means consisting of tiny (µ) bullets containing all necessary fatty acids (ω3) for the nutrition of the rotifera and that can be placed in small bullets proper for the zoo-plankton organisms (rotifera) while at the same time, there is a decrease of the production cost of this enrichment.

This invention is based on the production of an excellent quality and at a low cost enrichment emulsion improving the nutrition of the rotifera in fisheries, with ω3 fatty acids so as to further improve the nutrition of the larva offered to the consumers.

## Claims

1. Enrichment emulsion for the nutrition of the Zoo-plankton organisms (rotifera) that are necessary for the nutrition of the larva in fisheries with the necessary ω3 fatty acids, characterized by the fact that by this precise method of preparation, i.e.
For the production of 1000 gr of emulsion
900 gr sea water
50 gr cod-liver oil
35 gr span
15 gr tween or
it consists of tiny bullets containing all necessary fatty acids (ω3) for the nutrition of the rotifera and can be placed in small capsules of a small (µ) size proper for the zoo-plankton organisms at a relatively low cost of production.

2. The enrichment emulsion for the nutrition of the zoo-plankton organisms (rotifera) according to claim 1, may also be prepared in the following way :
For the production of 1000 gr of emulsion
500 gr sea water
250 gr cod-liver oil
175 gr span
75 gr tween
